# EUROPEAN PATENT APPLICATION

(11) **EP 1 933 548 A2**
(43) Date of publication of application: **18.06.2008**
(21) Application number: 07020140.5
(22) Date of filing: 15.10.2007
(51) Int. Cl.: H04N 5/20, G06T 5/40

(54) **Video signal processing device and video signal processing method**

(30) Priority: 14.12.2006 JP 2006336781
(71) Applicant: Kabushiki Kaisha Toshiba, Minato-ku, Tokyo 105-8001 (JP)
(72) Inventor: Kogure, Kiyoshi, Tokyo (JP)
(74) Representative: HOFFMANN EITLE

(57) **Abstract**

According to one embodiment, a video signal processing device includes a set-up level detecting unit that detects a set-up level of an input video signal, a set-up level-correcting unit that corrects the set-up level of the input video signal, and a histogram detecting unit that detects a histogram corresponding to a brightness of a video signal output from the set-up level correcting unit.

## Description

### CROSS-REFERENCE TO RELATED APPLICATIONS

This application is based upon and claims the benefit of priority from Japanese Patent Application No. 2006-336781, filed December 14, 2006, the entire contents of which are incorporated herein by reference.

### BACKGROUND

### 1. Field

One embodiment of the invention relates to a video signal processing device and a video signal processing method, and more particularly to a video signal processing device and video signal processing method capable of correcting the histogram according to the set-up level of an input video signal.

### 2. Description of the Related Art

A video signal processing device, which processes a histogram data corresponding to a brightness of an input video signal and corrects a gray scale of an output video signal based on the processing result, is disclosed by, for example, Japanese Patent No. 2512562.

The video signal processing device includes a histogram memory which temporarily stores the histogram data corresponding to the brightness of an input video signal and a histogram processing unit which processes the histogram data. The histogram processing unit detects histogram information such as an average value, mode value, maximum value, minimum value, difference coefficient, black area, white area, etc. from the histogram data in histogram averaging processing for extending the dynamic range of an output video signal. And, the histogram processing unit creates the corrected histogram data on the basis of these values. In the video signal processing device, original histogram data are corrected on the basis of the above histogram information so that correction of the output video signal optimized for the input video signal can be done. As the correction, for example, it is possible to prevent the dynamic range of the output video signal from being excessively extended and correct the gray scale over the entire brightness range thereof.

However, in the above prior art video signal processing device, the voltage level representative of black of an input video signal differs according to the standard such as the signal of NTSC or NTSC-J. Therefore, in the histogram processing unit in which the set-up level is optimized for, e.g. the NTSC-J having the set-up level of OIRE (Institute of Radio Engineers), where it receives the NTSC signal having the set-up level of 7.5 IRE, for the NTSC-J, the histogram data will be shifted toward a high brightness state, i.e. becomes the histogram data with no histogram in a black signal zone. As a result, the optimum correction of the histogram data, and hence the optimum gray scale correction of the output video signal may not be done.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary schematic diagram showing the external appearance of a video signal processing device according to a first embodiment;

Fig. 2 is an exemplary block diagram showing a configuration of the video signal processing device according to the first embodiment;

Fig. 3 is an exemplary block diagram showing a configuration of a set-up level processing unit and a histogram processing unit according to the first embodiment;

Figs. 4A to 4C are exemplary graphs showing an operation of the video signal processing device according to the first embodiment;

Figs. 5A to 5F are exemplary graphs showing an operation of a backlight control unit in the first embodiment;

Fig. 6 is an exemplary block diagram showing a configuration of the set-up level processing unit and the histogram processing unit according to a second embodiment; and

Figs. 7A to 7C are exemplary graphs showing an operation of the video signal processing device according to the second embodiment.

### DETAILED DESCRIPTION

Various embodiments according to the invention will be described hereinafter with reference to the accompanying drawings. In general, according to one embodiment of the invention, a video signal processing device includes a set-up level detecting unit that detects a set-up level of an input video signal, a set-up level correcting unit that corrects the set-up level of the input video signal, and a histogram detecting unit that detects a histogram corresponding to a brightness of a video signal output from the set-up level correcting unit. Further, according to another embodiment of the invention, a video signal processing device includes a histogram detecting unit that detects a histogram corresponding to a brightness of an input video signal, a set-up level detecting unit that detects a set-up level of the input video signal, the set-up level detecting unit outputting a histogram-correction controlling signal for correcting the histogram based on the set-up level, and a histogram correcting unit that corrects the histogram based on the histogram-correction controlling signal output from the set-up level detecting unit. Further, according to another embodiment of the invention, a video signal processing method includes detecting a set-up level of an input video signal, correcting the set-up level of the input video signal, outputting a corrected video signal based on the correction, and detecting a histogram corresponding to a brightness of the corrected video signal.

(First Embodiment)

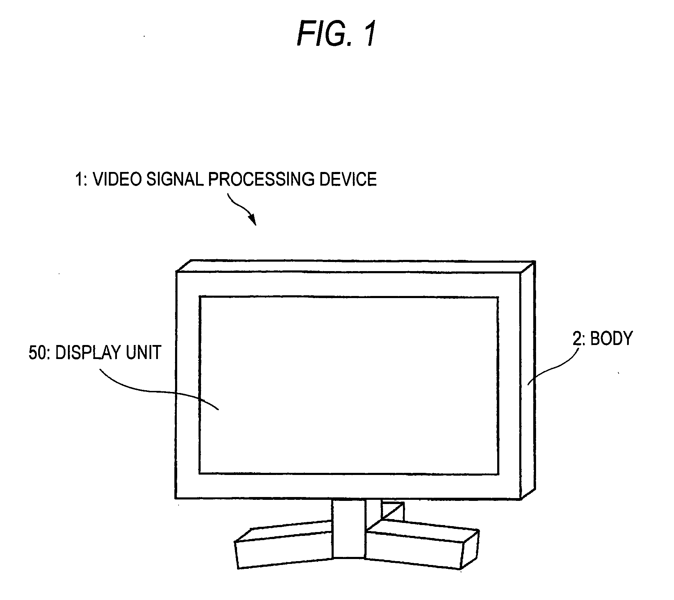

Fig. 1 is an exemplary schematic diagram showing the external appearance of a video signal processing device according to a first embodiment of this invention.

A video signal processing device 1 incorporates electronic components corresponding to the image processing such as a tuner or decoder inside a body 2. Inside the body 2, the video signal processing device 1 processes a video signal received from the outside, which is outputted from a display unit 50. The display unit 50 may be e.g. an LCD (Liquid Crystal Display).

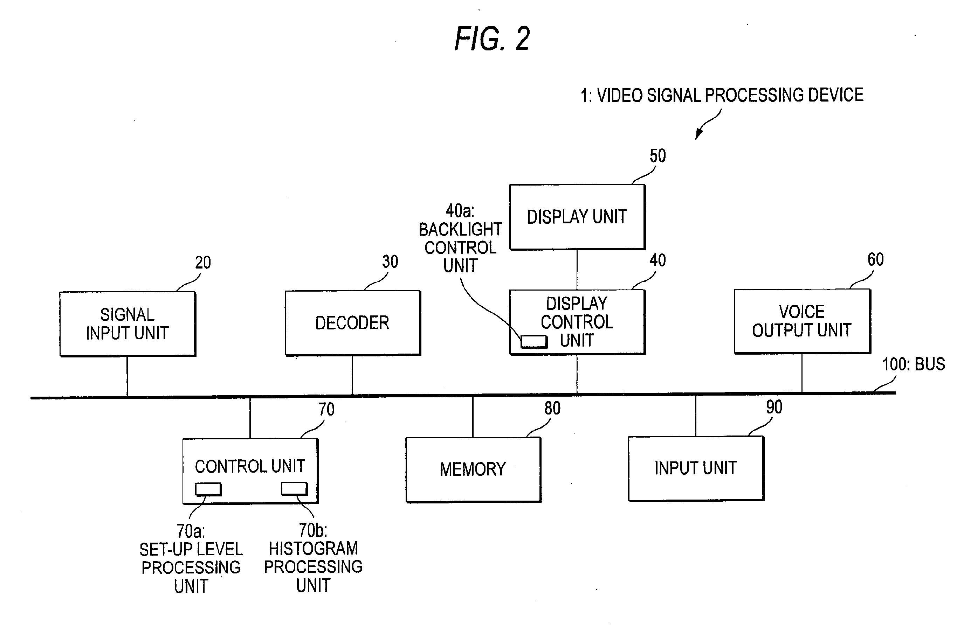

Fig. 2 is an exemplary block diagram showing the configuration of a video signal processing device according to the first embodiment of this invention.

A video signal processing device 1 includes a signal input unit 20 for receiving a tuner input signal demodulated from a video signal of a broadcasting radio wave received through an outside antenna and a video/audio input signal received from e.g. an external play-back machine; a decoder 30 for decoding the output received from the signal input unit 20 to output an input video signal and an input audio signal; a display control unit 40 for receiving the input video signal output from the decoder 30 and outputting an output video signal with the display controlled for the brightness and contrast; a display unit (LCD) 50 for displaying the output video signal output from the display control unit 40; a voice output unit 60 for outputting the audio signal received from the decoder 30 as a voice; a control unit 70 for controlling the respective units within the video signal processing device 1; a memory 80 for temporarily storing the data being processed by the control unit 70; an input unit 90 equipped with an input device consisting of a plurality of switches not shown; and a bus 100 connecting the respective units within the video signal processing device 1.

The control unit 70 incorporates a set-up level processing unit 70a for detecting and correcting the set-up level which is the voltage level representative of black of the input video signal output from the decoder 30, and a histogram processing unit 70b for detecting and correcting the histogram corresponding to the brightness of the input video signal.

The display control unit 40 incorporates a backlight control unit 40a for controlling the backlight of the display unit 50 which is LCD. The backlight control unit 40a operates on the basis of the detection result in the histogram processing unit 70b.

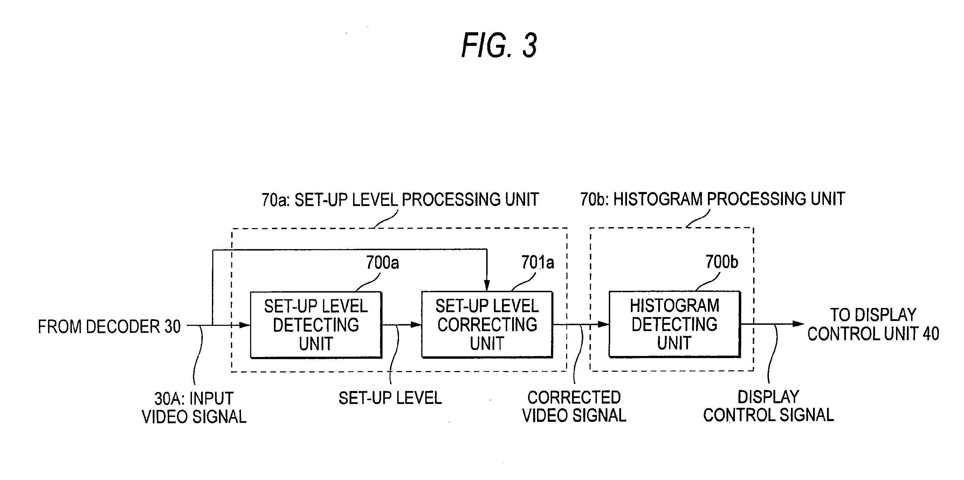

Fig. 3 is an exemplary block diagram showing the configuration of the set-up level processing unit 70a and histogram processing unit 70b according to the first embodiment of the invention.

The set-up level processing 70a incorporates a set-up level detecting unit 700a for detecting the set-up level of an input video signal 30A output from the decoder 30 and a set-up level correcting unit 701a for correcting the set-up level of the input video signal on the basis of the detection result in the set-up level detecting unit 700a.

The histogram processing unit 70b incorporates a histogram detecting unit 700b for receiving the corrected signal corrected in the set-up level correcting unit 701a to compute the distribution of the frequency corresponding to the brightness of the correction signal. The detection result in the histogram detecting unit 700b is transmitted to the display control unit 40 as a display control signal.

The tuner input signal and the video/audio signal supplied from an external play-back machine are received by the signal input unit 20 and transmitted to the decoder 30. The decoder 30 decodes the tuner input signal and the audio/video input signal to be transmitted as the input video signal to the display control unit 40 and the control unit 70. The decoder 30 also decodes the audio signal to be transmitted to the voice output unit 60. The display control unit 40 controls the input video signal on the basis of the setting, which is supplied to the display unit 50. The input video signal transmitted to the control unit 70 is analyzed by the set-up level processing unit 70a and the histogram processing unit 70b. The display control signal which is the result of histogram analysis is transmitted to the display control unit 40. The input video signal is corrected by for example, the backlight control unit 40a.

The processing in the control unit 70 and the processing in the display control unit 40 are effectively executed by temporarily storing the information in the memory 80. For example, where the histogram indicating the distribution of the brightness values of the input video signal is computed by the histogram processing unit 70b, the data of the brightness values are temporarily held in the memory 80.

The decoder 30 transmits the audio signal to the voice output unit 60 and the voice output unit 60 outputs voice.

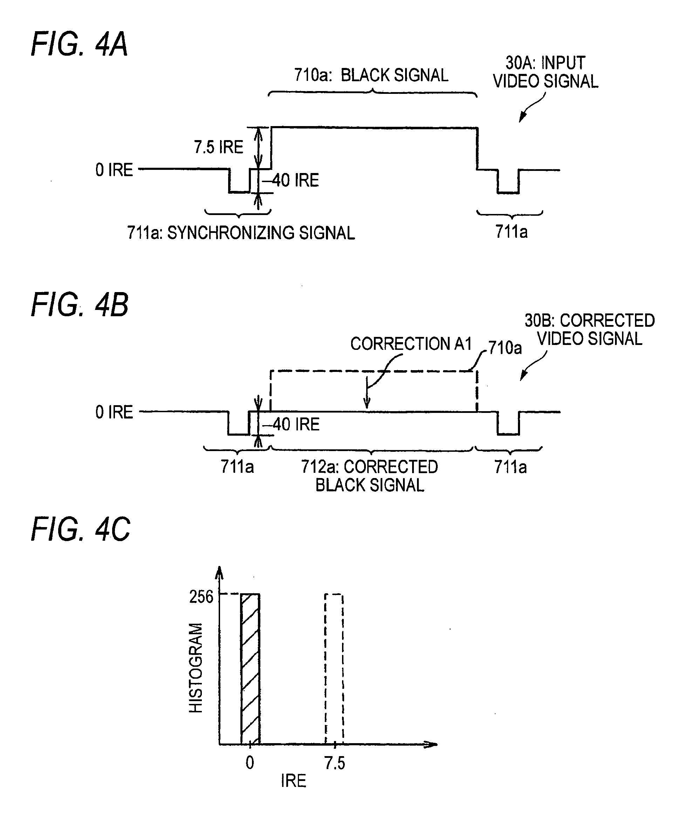

Figs. 4A to 4C are exemplary graphs showing the operation of the video signal processing device according to the first embodiment of this invention.

As seen from Fig. 4A, it is assumed that the input video signal 30A output from the decoder 30 contains a black signal 710a having a set-up level of 7.5IRE after each of synchronizing signals 711a. It is also assumed that the synchronizing signal 711a has a synchronizing level of -40IRE.

When an input video signal 30A is supplied to the set-up level detecting unit 700a, the set-up level detecting unit 700a detects that the set-up level of the input video signal 30A is 7.5IRE and transmits the detected signal to the set-up level correcting unit 701a. When the set-up level which is the detected signal is supplied to the set-up level correcting unit 701a, as seen from Fig. 4B, the set-up level correcting unit 701a corrects the black signal 710a by 7.5IRE as a correction A1 thereby to create a corrected black signal 712a which is output as a corrected video signal 30B.

Next, when this corrected video signal 30B is supplied to the histogram detecting unit 700b, the histogram detecting unit 700b divides the signal level between synchronizing signals 711a into 256 parts to be sampled, thereby detecting the histogram. Thus, the histogram as indicated in solid line in Fig. 4C can be obtained. The histogram as indicated in dotted line in Fig. 4C is that of the input video signal 30A having the black signal 710a in Fig. 4A. The histogram detecting unit 700b outputs the histogram indicated by the solid line in Fig. 4C as a histogram signal.

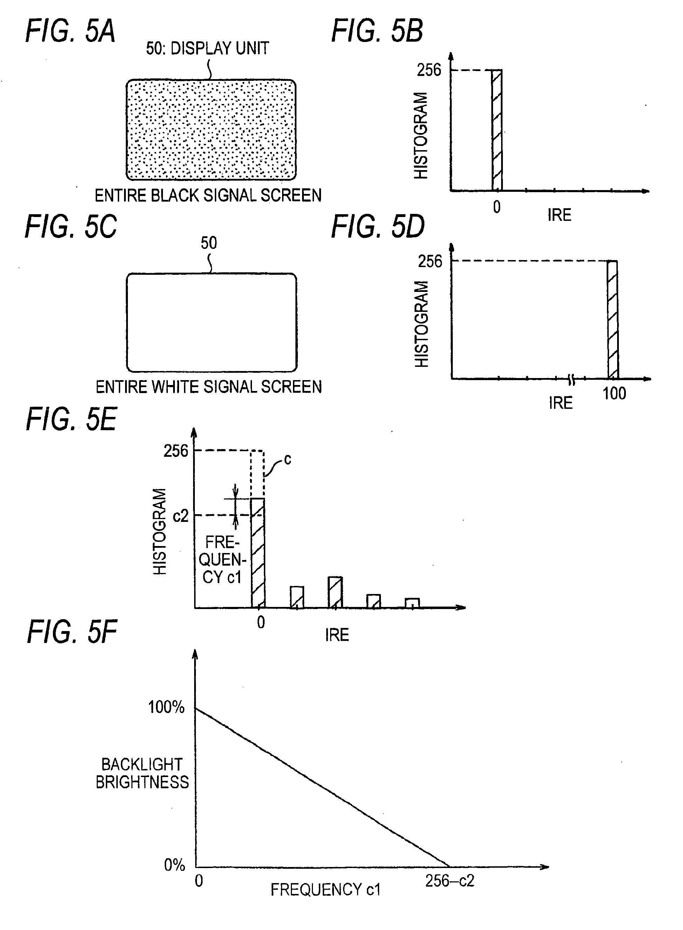

Figs. 5A to 5F are exemplary graphs showing the operation of the backlight control unit 40a in the first embodiment of this invention.

Where the input video signal as illustrated in Figs. 5A and 5C are output from the decoder 30, the histogram signal, which has been output through the above processing by the set-up level detecting unit 700a, set-up level correcting unit 701a and histogram detecting unit 700b, is accumulated in the memory 80. The backlight control unit 40a acquires the histogram data accumulated in the memory 80 from the histogram processing unit 70b over e.g. one frame of the video signal and adds up them to be standardized. Thus, in a frame in which the entire screen is the black signal (brightness of 0), the input video signal as shown in Fig. 5A, i.e. the histogram as illustrated in Fig. 5B can be obtained. In a frame in which the entire screen is a white signal (brightness of 100 %), the input video signal as shown in Fig. 5C, i.e. the histogram as illustrated in Fig. 5D can be obtained.

Next, the backlight control unit 40a detects the frequency contained in a region c of OIRE, i.e. the value of c1 which is the frequency of the extent exceeding c2 which is a threshold value. The backlight control unit 40a, as seen from Fig. 5E, changes the brightness of the backlight in the display unit 50 which is the LCD on the basis of the value of the frequency c1.

Since OIRE is the voltage level representative of black, as seen from Fig. 5F, if there are many areas indicative of black on the display unit 50, the brightness of the backlight is lowered. If there are less areas indicative of black, the brightness of the backlight is raised. If the value of c1 is 0, the backlight brightness is set at 100 %, whereas if the value of c1 is 256-c2, the backlight brightness is set at 0 %.

In accordance with the first embodiment of this invention, where the backlight control unit 40a executes the control relied on the NTSC-J, the control is executed on the basis of the frequency occupied in the region c shown in Fig. 5E. On the other hand, also when the video signal relied on NTSC having the set-up level of 7.5IRE is received, the set-up level is corrected by the set-up level correcting unit 701a. Therefore, the histogram in which the voltage signal indicative of black is standardized to OIRE can be detected, thereby permitting the backlight to be appropriately controlled.

The detection result obtained in the histogram processing unit 70b can be applied to not only the backlight control unit 40a but also other display control uses.

As regards the brightness of the signal other than black signal, according to the processing in the display control unit 40, the video signal may be corrected or may not be corrected. In executing the correction, a technique of extending the entire dynamic range can be adopted.

(Second Embodiment)

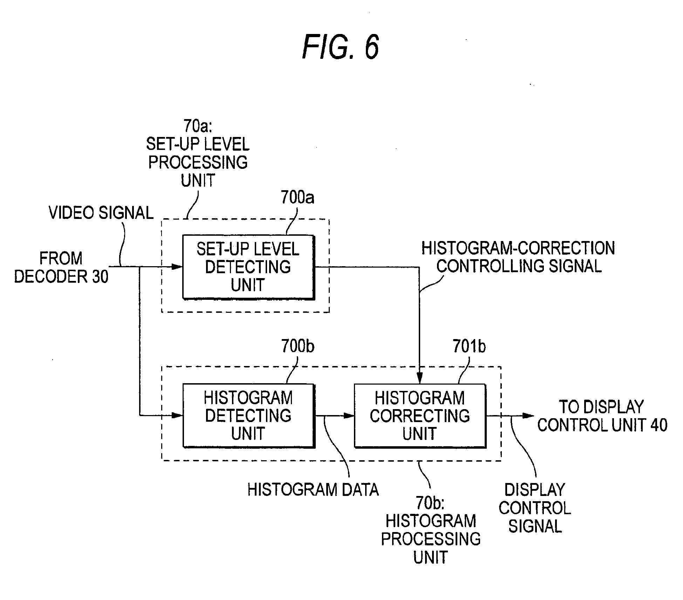

Fig. 6 is an exemplary block diagram showing the configuration of the set-up level processing unit 70a and histogram processing unit 70b according to the second embodiment of this invention. In the following explanation, like reference symbols refers to like constructions and functions in the first embodiment.

The set-up level processing 70a incorporates a set-up level detecting unit 700a for detecting the set-up level of an input video signal 30A output from the decoder 30. The set-up level detecting unit 700a outputs a histogram-correction controlling signal on the basis of the set-up level thus detected.

The histogram processing unit 70b incorporates a histogram detecting unit 700b for detecting the histogram of the input video signal output from the decoder 30 and a histogram correcting unit 701b for correcting the histogram distribution of the histogram signal detected by the histogram detecting unit 700b on the basis of the histogram-correction controlling signal output from the set-up level detecting unit 700a. The detection result in the histogram correcting unit 701b is transmitted to the display control unit 40 as a display control signal.

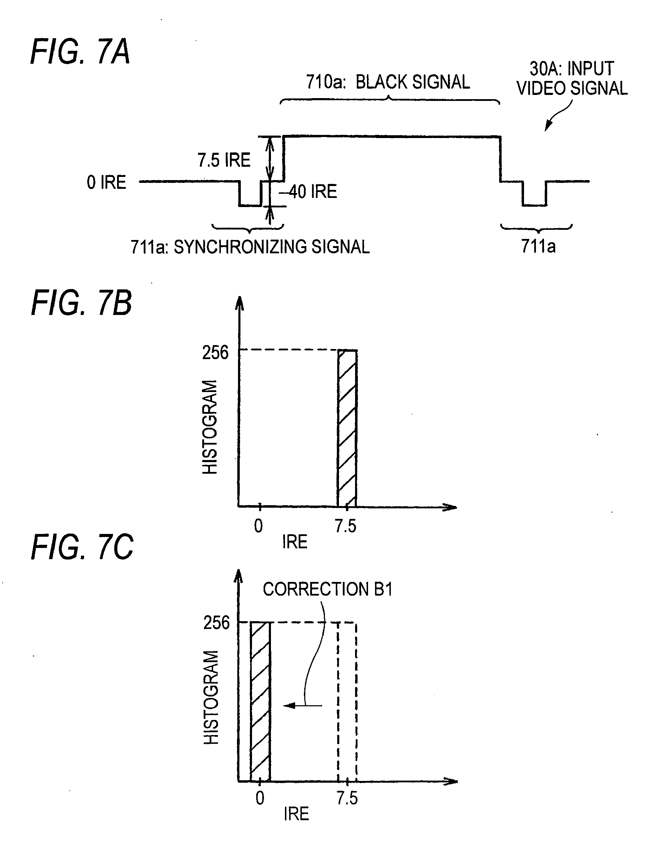

Figs. 7A to 7C are exemplary graphs showing the operation of the video signal processing device according to the second embodiment of this invention.

As seen from Fig. 7A, it is assumed that the input video signal 30A output from the decoder 30 contains a black signal 710a having a set-up level of 7.5IRE after each of synchronizing signals711a. It is also assumed that the synchronizing signal 711a has a synchronizing level of - 40IRE.

When the input video signal 30A is supplied to the set-up level detecting unit 700a, the set-up level detecting unit 700a detects that the set-up level of the input video signal 30A is 7.5IRE and transmits the detected signal as a histogram-correction controlling signal to the histogram correcting unit 701b.

Further, when this input video signal 30A is supplied to the histogram detecting unit 700b, the histogram detecting unit 700b divides the signal level between synchronizing signals 711a into 256 parts to be sampled, thereby detecting the histogram. Thus, the histogram as indicated in Fig. 7B can be obtained. The histogram thus detected is output as histogram data.

The histogram correcting unit 701b, when it receives the histogram data and the histogram-correction controlling signal, as seen from Fig. 7C, corrects the histogram data received from the histogram detecting unit 700b by 7.5IRE as a correction B1 to create new histogram data. The control signal based on the corrected histogram data is transmitted to the backlight control unit 40a of the display control unit 40 as a control signal by histogram analysis based on the corrected histogram.

In accordance with the second embodiment of this invention, also when the video signal relied on NTSC having a set-up level of 7.5IRE is received, on the basis of the set-up level detected by the set-up level detecting unit 700a, the set-up level of the histogram data is corrected by the histogram correcting unit 701b. Therefore, the histogram in which the voltage signal indicative of black is standardized to OIRE can be output, thereby permitting the display control relied on NTSC-J to implemented.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A video signal processing device, comprising:
a set-up level detecting unit that detects a set-up level of an input video signal;
a set-up level correcting unit that corrects the set-up level of the input video signal and outputs a video signal; and
a histogram detecting unit that detects a histogram corresponding to a brightness of the video signal output from the set-up level correcting unit.

2. The video signal processing device according to claim 1,
wherein the set-up level correcting unit corrects the set-up level of the input video signal based on a detection result in the set-up level detecting unit.

3. The video signal processing device according to claim 1, further comprising:
a receiving unit that receives the input video signal;
a decoder that decodes the input video signal to output an output video signal; and
a display controlling unit that controls the output video signal output from the decoder based on the histogram detected by the histogram detecting unit.

4. The video signal processing device, according to claim 3,
wherein the display controlling unit controls the brightness of the output video signal based on the histogram.

5. A video signal processing device, comprising:
a histogram detecting unit that detects a histogram corresponding to a brightness of an input video signal;
a set-up level detecting unit that detects a set-up level of the input video signal, the set-up level detecting unit outputting a histogram-correction controlling signal for correcting the histogram based on the set-up level; and
a histogram correcting unit that corrects the histogram based on the histogram-correction controlling signal output from the set-up level detecting unit.

6. The video signal processing device, according to claim 5,
wherein the display controlling unit controls a brightness of an output video signal based on the histogram.

7. The video signal processing device, according to claim 4, further comprising
a display unit that displays the output video signal with the brightness controlled.

8. The video signal processing device, according to claim 6, further comprising
a display unit that displays the output video signal with the brightness controlled.

9. A video signal processing method, comprising:
detecting a set-up level of an input video signal;
correcting the set-up level of the input video signal;
outputting a corrected video signal based on the correction; and
detecting a histogram corresponding to a brightness of the corrected video signal.
